# EUROPEAN PATENT SPECIFICATION

(11) **EP 1 410 535 B1**
(45) Date of publication and mention of the grant of the patent: **02.05.2007**
(21) Application number: 01965445.8
(22) Date of filing: 12.09.2001
(51) Int. Cl.: H04B 10/152

(54) **METHOD OF POWER CONTROL IN AN OPTICAL COMMUNICATION SYSTEM**
VERFAHREN ZUR LEISTUNGSREGELUNG IN EINEM OPTISCHEN KOMMUNIKATIONSSYSTEM
PROCEDE DE COMMANDE DE PUISSANCE DANS UN SYSTEME DE COMMUNICATION OPTIQUE

(30) Priority: 13.09.2000 GB 0022607
(43) Date of publication of application: 21.04.2004
(73) Proprietor: Ericsson AB, Stockholm (SE)
(72) Inventor: ARNOLD, Philip Andrew, Brinklow, Rugby CV23 0NN (GB)
(74) Representative: Collier, Ian Terry
(86) International application number: PCT/GB2001/004087
(87) International publication number: WO 2002/023770

(56) References cited:
- EP-A- 0 331 255
- EP-A- 0 552 937
- EP-A- 0 903 875
- GB-A- 2 219 165
- PATENT ABSTRACTS OF JAPAN vol. 010, no. 158 (E-409), 6 June 1986 (1986-06-06) & JP 61 012138 A (NIPPON DENKI KK), 20 January 1986 (1986-01-20)

## Description

The present invention concerns a method of power control in wavelength division multiplex (WDM) optical communication system; the invention also relates to a WDM optical communication system operating according to the method.

Optical communication systems are known and comprise a number of spatially distributed nodes interconnected through optical fibre waveguides, the waveguides operable to convey information bearing radiation between the nodes. Such systems often employ wavelength division multiplexing (WDM) techniques so that communication traffic propagating between the nodes is modulated onto one or more radiation components occupying corresponding mutually different wavebands. The wavebands are frequently referred to as channels.

When such systems are operating, the number of channels in use can be dynamically changing as WDM add/drop multiplexers and WDM cross-connects at the nodes are reconfigured under software control to add or remove active channels. Dynamic changes can also arise because of channel failures arising from optical parts being disturbed or damaged, for example during maintenance procedures.

The systems are designed to maintain mutually similar radiation power in active channels propagating along waveguides in the systems so that optical devices such as pumped erbium doped fibre amplifiers (EDFAs) incorporated therein are not subjected to sudden input power fluctuations nor to excess radiation concentrated in specific channels. As EDFAs are inherently non-linear devices, disparity in relative channel radiation powers input to such EDFAs can cause accentuation of channel radiation power differences.

It is therefore conventional practice in the nodes of the systems to include feedback loops to monitor and regulate radiation power associated with the channels to ensure that they are of mutually similar power. Moreover, it is also conventional practice when outputting radiation from nodes to emit into associated waveguides as much radiation power as possible and to apply attenuation at nodes subsequently receiving the emitted radiation. This practice is adopted in order to try to obtain as high a signal-to-noise ratio as possible in the systems and hence improve their traffic carrying capacity. Additionally, for design simplicity, it is also conventional practice to include an attenuator at each receiver node to regulate the power of received radiation applied to an optical detector thereat; such design simplicity enables the attenuator, the detector and an associated power control feedback loop to be co-sited at the receiver node.

The inventor has appreciated that the amount of radiation power presently emitted in conventional optical communication systems is sufficient to cause optical non-linear effects in optical fibre waveguides interconnecting nodes. In long-haul optical fibre waveguide paths approaching 100 km in length, such non-linear effects occur primarily in regions of the paths closest to where radiation is launched thereinto on account of attenuation along the waveguide paths reducing the power of the radiation at regions of the paths remote from where the radiation is launched thereinto. Moreover, such non-linear effects can result in four-way mixing, cross phase modulation and similar mutual interactions between radiation components. In some communication systems including long-haul optical fibre waveguide paths approaching 100 km in length without optical repeaters, radiation emitted thereinto can be 100 mW or more. The inventor has further appreciated that the non-linear effects can themselves be bandwidth limiting to the systems. Moreover, when emitted radiation power levels exceed 1 W in a communication system optical fibre waveguide, waveguide reliability can deteriorate because there is sufficient power to physically damage the waveguide in the event of a defect arising in the waveguide; standing wave patterns can arise which causes extensive damage along major parts of waveguides.

The inventor has further appreciated that it is important in future high-performance optical communication systems to control the total power of composite WDM radiation emitted into optical fibre waveguides of the systems; this is a departure from conventional practice where excess received power is controlled using input attenuators. Such control is necessary to reduce interactions arising from waveguide non-linear optical phenomena and to circumvent reliability problems when excess radiation power is emitted into the waveguides. The excess power can severely damage the waveguides in the event of one or more defects occurring therein, for example a waveguide split or localised point of power absorption therein.

According to a first aspect of the present invention, there is provided a method of power control in a wavelength division multiplex (WDM) optical communication system, the WDM system comprising a plurality of nodes coupled together by optical waveguiding means for guiding communication traffic beating radiation between the nodes, the radiation being wavelength division multiplexed into a plurality of channels having mutually different wavebands, the method characterised by: regulating the power of the communication traffic bearing radiation at the first node using power regulating means to provide optical output radiation; transmitting the optical output radiation through the waveguiding means to a second node of the system; measuring radiation power of radiation received at the second node to generate corresponding power indicative data; generating error data for regulating the optical output radiation measured at the second node to a predetermined power level; and controlling the radiation power received at the second node at the predetermined level by controlling the power of the optical output radiation at the first node in response to the error data.

By controlling the power of the WDM radiation transmitted from the first node in response to the measured radiation power received at the second node such as to maintain the received radiation power at a predetermined level, this reduces the likelihood of optical non-linear effects arising in the waveguiding means. In contrast in the known methods, as described above, the WDM radiation is transmitted at a fixed power, conventionally at as high a power as possible to ensure as high a signal-to-noise ratio as possible, and the radiation power is regulated at the receive node using an attenuator at the input of receive node. When such a method is applied to nodes that are interconnected by optical fibre waveguides of shorter lengths this high transmit power can give rise to optical non-linear effects. In accordance with the method of the present invention in which regulation of the WDM radiation power occurs at the transmit node, this ensures that only sufficient power is transmitted to ensure a pre-selected power at the receive node thereby reducing the likelihood on non-linear optical effects arising.

In the method, it is beneficial to communicate at least one of the power indicative data and the error data are communicated to the first node. Communication of such data enables controlling means for generating the error data to be located at the first or second node.

In one form of the method, the controlling means and regulating means are co-located at the first node and the second node communicates the power indicative data to the first node.

Alternatively, the controlling means is located at the second node and the error data is communicated to the first node.

Preferably the method comprises communicating said data in a WDM supervisory channel. Use of the supervisory channel circumvents a need to provide alternative communication pathways for conveying said data.

Advantageously the method further comprises determining the number of active wavelength division multiplexed channels present in the communication traffic bearing radiation. One method advantageously comprises varying the predetermined level in response to the number of active channels. The predetermined level is preferably varied as a linear function of the number of active channels so that radiation power per active channel is maintained substantially constant at the second node in operation.

In an alternative method, the predetermined power level is beneficially maintained substantially constant when one or more channels in the output radiation are determined as being active. Such a substantially constant radiation power received at the second node ensures that components such as erbium doped fibre amplifiers in both the first and the second nodes are operating at nominally constant power.

Beneficially, the controlling means is operable to set the regulating means to an attenuation greater than -20 dB when none of the channels are determined as being active. This attenuation reduces the amount of optical noise injected into the waveguiding means.

Preferably when the controlling means is located in the second node, the method further comprises communicating the number of active channels to the second node, preferably; in a supervisory channel associated with the channels bearing the communication traffic.

It is also preferable in the method that: the regulating means is capable of attenuating independently radiation of each channel; and the method comprises measuring radiation power for each channel received at the second node independently and controlling attenuation of each channel at the first node to substantially equalize radiation power present in the channels which are determined as being active. Such independent control of the channels enables channel leveling of radiation received at the second node, thereby correcting for any differential frequency-dependent attenuation phenomena that might occur in the waveguiding means.

In order to simplify the system, it is preferable in the method that the regulating means is provided by an optical amplifier whose forward gain is controllable by the error data modulating optical pumping power applied to the amplifier.

In a second aspect of the invention, there is provided a wavelength division mulitiplex (WDM) optical communication system comprising: a plurality of nodes coupled together by optical waveguiding means for guiding communication traffic bearing radiation between the nodes, the radiation being wavelength division multiplexed into a plurality of channels having mutually different wavebands, which is characterised by: power regulating means for regulating radiation power of the communication traffic bearing radiation at the first node to generate corresponding output radiation; emitting means at the first node for emitting the output radiation into the waveguiding means for propagation to a second node of the system; radiation power measuring means for measuring radiation power of radiation received at the second node and for generating corresponding power indicative data; and controlling means for generating error data for regulating the optical output radiation measured at the second node to a predetermined level and controlling the radiation power received at the second node to a predetermined level by controlling the power of the optical output radiation in response to the error data.

Preferably the system comprises means for communicating at least one of the error data and the power indicative data to the first node.

In one embodiment the controlling means is located at the first node and the power indicative data is communicated to the first node. Alternatively the controlling means can be located at the second node and the error data communicated to the first node. Conveniently the means for communicating said data comprises communicating said data in a WDM supervisory channeL Use of the supervisory channel circumvents a need to include alternative communication pathways for conveying the said data to the first node.

Advantageously, the first node includes monitoring means for determining the number of active wavelength division multiplexed channels present in the communication traffic bearing radiation. In one arrangement the predetermined level is varied in response to the number of active channels. The controlling means is preferably operable to vary the predetermined level substantially as a linear function of the number of active channels so that the radiation power per active channel remains substantially constant in operation.

Such a constant level of radiation power per active channel ensures that the signal-to-noise ratio of each active channel is maintained as the number of active channels varies.

Alternatively, the controlling means is beneficially operable to maintain the predetermined power level substantially constant at the second node when one or more channels in the output radiation are determined as being active; the substantially constant predetermined power level ensures that devices such as optical amplifiers in the nodes can operate at nominally constant pumping power.

Preferably, the controlling means is operable to set the regulating means to an attenuation, greater than -20 dB when none of the channels are determined as being active. This attenuation reduces optical noise being injected into the waveguiding means when none of the channels are active, and thereby reduces bit error rate occurrence within the system.

Advantageously when the controlling means is located in the second node the system further comprises means for communicating the number of active channels to the second node, preferably, in a WDM supervisory channel associated with the channels bearing the communication traffic.

In order to compensate for frequency-dependent optical attenuation phenomena in the waveguiding means, the regulating means is operable to independently regulate radiation power of radiation associated with each channel, and the monitoring means is operable to monitor radiation power of each channel received at the second node and the controlling means is operable to individually adjust radiation power of each channel at the first node to substantially mutually equalize radiation power of the channels which are determined as being active. Beneficially, the active channels are mutually equalized in radiation power to within 6 dB.

Embodiments of the invention will now be described, by way of example only, with reference to the following diagrams in which:
- Figure 1: is a schematic illustration of a first embodiment of the invention, the embodiment comprising two optical communication system nodes mutually interconnected through associated optical fibre waveguides; and
- Figure 2: is a schematic illustration of a second embodiment of the invention, the embodiment comprising two optical communication system nodes mutually interconnected through associated optical fibre waveguides.

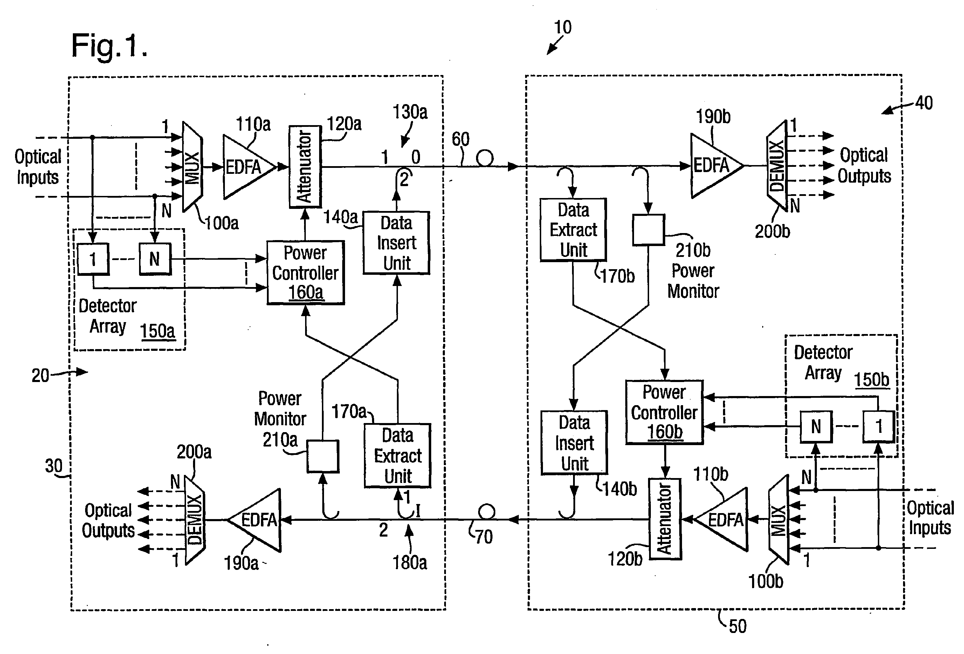

Referring to Figure 1, there is shown a part of an optical communication system 10 comprising first and second nodes 20, 40 respectively. The first node 20 is included within a dotted line 30 and the second node 40 is included within a dotted line 50. The first node 20 is connected to the second node 40 through an optical fibre waveguide 60 for conveying communication traffic from the first node 20 to the second node 40. Likewise, the second node 40 is connected to the first node 20 through an optical fibre waveguide 70 for conveying traffic from the second node 40 to the first node 20. The nodes 20, 40 include identical components for communicating to one another.

Communication between the nodes 20, 40 will now be described in general overview.

The first node 20 receives up to N optical input radiation signals and multiplexes them to provide first composite radiation. The first node 20 then amplifies the first composite radiation, and subsequently attenuates the resulting amplified first composite radiation and finally adds a first monitoring signal thereto to provide first output radiation for emitting into the waveguide 60 to the second node 40. The first node 20 also receives second output radiation from the second node 40, extracts a second monitoring signal therefrom, amplifies the second output radiation and then demultiplexes the amplified second radiation to provide up to N optical output signals. The node 20 employs the second monitoring signal to regulate attenuation of the first composite radiation so as to provide a predetermined first output radiation received power level at the second node 40. Such regulation also takes account of attenuation occurring in the waveguide 60.

Likewise, in a reciprocal manner, the second node 40 receives up to N optical input radiation signals and multiplexes them to provide second composite radiation. The second node 40 then amplifies the second composite radiation, and subsequently attenuates the resulting amplified second composite radiation and finally adds the second monitoring signal thereto to provide the second output radiation for emitting into the waveguide 70 to the first node 20. The second node 40 also receives the first output radiation from the first node 20, extracts the first monitoring signal therefrom, amplifies the first output radiation and then demultiplexes the amplified first output radiation to provide up to N optical output signals. The node 40 employs the first monitoring signal to regulate attenuation of the second composite radiation to provide a predetermined second radiation received power at the first node 20. Such regulation also compensates for attenuation occurring along the waveguide 70.

The first node 20 monitors power in the second output radiation received thereat to generate the first monitoring signal. Similarly, the second node 40 monitors power in the first output radiation received thereat to generate the second monitoring signal. Thus, the first node 20 monitors the second output radiation it receives from the second node 40 and provides feedback to the second node 40 for it to regulate its attenuator so that the second radiation is maintained at a predetermined power level as monitored by the first node 20. Likewise, in a reciprocal manner, the second node 40 monitors the first output radiation it receives from the first node 20 and provides feedback to the first node 20 for it to regulate its attenuator so that the first radiation is also maintained at a predetermined power level as monitored by the second node 40. As a consequence of regulating the output radiation in the nodes 20, 40 to a regime where optical non-linear phenomena in the waveguides 60, 70 are substantially circumvented, performance of the system 10 is thereby enhanced.

Component parts of the nodes 20, 40 will now be described in further detail. The nodes 20, 40 are configured in an identical manner and include similar component parts; on account of the similarity, only component parts of the first node 20 will be elucidated. Component parts of the first node 20 will be identified by a qualifier 'a' whereas corresponding component parts of the second node 40 will be identified by a qualifier 'b'.

The first node 20 comprises an optical multiplexer 100a including N optical input ports for receiving up to N input radiation signals. The multiplexer 100a comprises an optical output port which is conveyed through an erbium doped fibre amplifier (EDFA) 110a and then through an attenuator 120a to a first optical input port of a coupler 130a. A second optical input port of the coupler 130a is connected to an optical output port of a supervisory channel data inserting unit 140a. An optical output port of the coupler 130a is connected to the fibre waveguide 60 for coupling the first output radiation from the coupler 130a to the second node 40. The N input ports are also connected to corresponding optical input ports of an array of power detectors 150a whose power monitoring electrical outputs are conveyed to a power controller 160a. An electrical output of the controller 160a is connected to an electrical control input of the attenuator 120a for controlling attenuation provided by the attenuator 120a. A further electrical input to the controller 160a is connected to an electrical output of a supervisory channel data extracting unit 170a whose optical input is connected to a first optical output port of a coupler 180a. A second optical output port of the coupler 180a is coupled through an EDFA 190a to an optical input port of an optical demultiplexer 200a. The demultiplexer 200a includes N optical output ports at which up to N radiation signals are output in operation. The second optical output port of the coupler 180a is also conveyed to an optical input of a power monitor 210a. The power monitor 210a includes an electrical output which is connected to an electrical input of the data inserting unit 140a. An optical input port of the coupler 180a is coupled to the fibre waveguide 70.

Radiation conveyed along the fibre waveguides 60, 70 is in WDM form where the N radiation signals are included in mutually different wavelength ranges, each signal occupying a range of wavelengths corresponding to its associated channel. Moreover, the radiation in the waveguides 60, 70 also includes radiation corresponding to one or more supervisory channels, the supervisory channels being used to convey, amongst other supervisory information, radiation power data for use in controlling the attenuator 120a. The supervisory channels are set at wavelength ranges different to those associated with the N radiation signals. If necessary, the supervisory channels can occupy a wavelength range corresponding to a channel N+1, namely following monotonically from channels 1 to N used to convey communication traffic.

Operation of the first node 20 will now be described in detail with reference to Figure 1. The second node 40 operates in a similar reciprocal manner.

The first node 20 receives input radiation from the node 40 via the fibre waveguide 70. The radiation propagates to the coupler 180a whereat it is split into first and second components, the first component passing to the data extracting unit 170a and the second component coupling to the power monitor 210a and also via the EDFA 190a to the demultiplexer 200a. Radiation received at the demultiplexer 200a is filtered and directed to respective optical outputs depending upon radiation wavelength. The power monitor 210a measures total power in radiation output from the second port of the coupler 180a to provide corresponding power data which it passes to the data insertion unit 140a. The unit 140a inserts the power data into the supervisory channel present in radiation output from the first node 20 along the fibre waveguide 60 to the second node 40; the second node 40 thereby establishes total radiation power received at the first node 20 and its power controller 160b compares the total radiation power with a predetermined power level and proceeds to generate an error signal for adjusting its attenuator 120b to stabilize the total power measured at the first node 20 at the predetermined power level. The first component of radiation from the coupler 180a passes to the data extraction unit 170a which extracts therefrom supervisory information supplied from the second node 40 relating to total power in radiation receive thereat from the first node 20 as measured by the power monitor 210b. Total power information passes from the extraction unit 170a to the power controller 160a which also receives radiation power information from the array 150a; power information from the array 150a is used by the power controller 160a to set an appropriate attenuation for the attenuator 120a, for example depending upon the number of optical inputs of the multiplexer 100a receiving radiation and thereby being active. The power controller 160a forms part of a feedback loop and generates an error signal for adjusting attenuation provided by the attenuator 120a to maintain the total power in radiation received at the second node 40 to a predetermined power level. In a first operating regime, the predetermined power level can be maintained constant irrespective of the number of active channels provided that at least one channel is active. Alternatively, in a second operating regime, the predetermined power level can be made variable as a linear function of the number of active inputs to the multiplexer 100a in order to maintain radiation power per active channel substantially constant, for example within a 6 dB error margin.

It is preferable that up to N input radiation signals received at the nodes 20, 40 are mutually equalised in power prior to being input to the multiplexers 100a, 100b; such equalisation is necessary to circumvent the EDFAs 110a, 110b accentuating radiation of certain relatively more powerful channels. If necessary, optical power leveling units can be included in the nodes 20, 40 and configured to precede the multiplexers 100a, 100b.

In a modified version of the nodes 20, 40, the EDFAs 110a, 110b can be modified to provide a variable amplification function, thereby circumventing a need to include the attenuators 120a, 120b and hence simplifying the nodes 20, 40; gain provided by the EDFAs 110a, 110b can, for example, be controlled from the power controllers 160a, 160b by adjusting pumping power applied to the EDFAs 110a, 110b. Moreover, the EDFAs 190a, 190b can be omitted to provide a further simplification of the nodes 20, 40 provided that sufficient radiation power is received for the demultiplexers 200a, 200b to output sufficient radiation power at their optical output ports.

A power control feedback loop provided in part by the power controller 160a in the node 20 is arranged to have a relatively long time constant, for example greater than one second. Such a relatively long time constant is chosen to try to avoid transient overshoot in the feedback loop from occurring. Most changes in radiation power received at the nodes 20, 40 from one another arise, other than by deliberately inserting and removing channels, as a result of environmental temperature changes which occur gradually, for example over a time period of minutes. Thus, the nodes 20, 40 are effective at compensating for varying power losses occurring along the fibre waveguides 60, 70 as well as fluctuations in optical gain provided by the EDFAs 110a, 110b.

As described earlier, in a first operating regime, the nodes 20, 40 are normally operated to maintain received radiation power at a predetermined power limit. Alternatively, in a second operating regime, the aforementioned predetermined level can be made variable for each of the nodes 20, 40 depending upon the number of active channels being conveyed between the nodes 20, 40; the power controllers 160a, 160b are capable of determining the number of active channels from power information received thereat from the detector arrays 150a, 150b respectively. If there are no active inputs conveying input radiation to the multiplexers 100a, 100b, their respective power controllers 160a, 160b can be operable to apply a relatively high attenuation, for example in the order of -35 dB and at least greater than -20 dB, at their associated attenuators 120a, 120b to prevent the attenuators 120a, 120b being set to minimum attenuation and thereby injecting optical noise into the fibre waveguides 60, 70. The first regime ensures that the EDFAs 110a, 110b are operating a nominally constant power output. The second regime ensures that radiation associated with each WDM channel conveyed through the fibre waveguides 60, 70 is of nominally constant power.

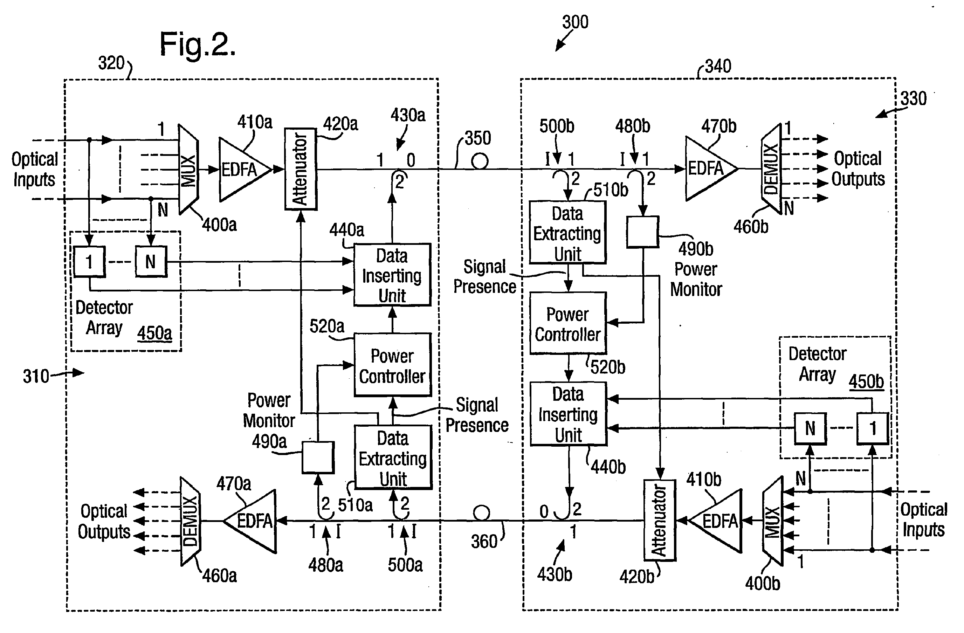

The present invention is capable of being implemented in alternative embodiments to that shown in Figure 1. Referring now to Figure 2, there is shown part of a communication system indicated by 300, the part 300 comprising first and second nodes. The first node is indicated by 310 and is included within a dotted line 320. Similarly, the second node is indicated by 330 and is included within a dotted line 340. The first node 310 is connected to the second node 330 through an optical fibre waveguide 350 for conveying communication traffic from the first node 310 to the second node 330. Likewise, the second node 330 is connected to the first node 310 through an optical fibre waveguide 360.

Component parts included in the nodes 310, 330 for use in mutually communicating along the fibre waveguides 350, 360 are identical and similarly configured. These parts will now be described using a qualifier 'a' to refer to a component in the first node 310 and a qualifier 'b' to refer to a component in the second node 330.

The component parts and their interconnection will now be elucidated for the first node 310, Similar component parts and interconnection pertain to the second node 330.

The first node 310 includes an optical multiplexer 400a comprising N optical input ports for receiving up to N input radiation signals and an optical output connected through an EDFA 410a to an optical input port of an optical attenuator 420a. An optical output port of the attenuator 420a is coupled to a first input port of an optical coupler 430a. The coupler 430a comprises a second input port which is coupled to an optical output port of a data inserting unit 440a. As well as being connected to the multiplexer 440a, the N input ports are also conveyed to an optical detector array 450a, each port having its corresponding detector in the array 450a. Electrical measurement outputs from the array 450a are coupled to electrical inputs of the supervisory channel inserting unit 440a.

The first node 310 further includes an optical demultiplexer 460a comprising N optical output ports and an optical input port coupled to an optical output port of an EDFA 470a. The EDFA 470a incorporates an optical input port which is connected to a first output port of an optical coupler indicated by 480a. A second output port of the coupler 480a is coupled to an optical input port of a power monitor 490a. An input port of the coupler 480a is connected to a first output port of an optical coupler 500a. A second output port of the coupler 500a is coupled to an optical input port of a data extracting unit 510a. Lastly, an input port of the coupler 500a is connected to the fibre waveguide 360.

The first node 310 additionally comprises a power controller 520a which is connected to receive power monitoring output data from the power monitor 490a and also a signal presence output from the data extraction unit 510a. An electrical output from the power controller 520a is coupled to an electrical input of the data inserting unit 440a. Finally the data extracting unit 510a includes a first signal presence output which is connected to an electrical input of the power controller, and also includes a second output which is coupled to a control input of the attenuator 420a.

Operation of the nodes 310, 330 will now be elucidated in general overview.

The first node 310 receives up to N optical radiation signals at the multiplexer 400a and multiplexes them to provide first composite radiation which is subsequently amplified by the EDFA 410a. The amplified composite radiation propagates to the attenuator 420a which controllably attenuates it to provide corresponding first output radiation which passes through the coupler 430a to the fibre waveguide 350. The first output radiation propagates to the second node 330 and is received at the coupler 500b thereof. The coupler 500b diverts a portion of the radiation received thereat to the data extracting unit 510b and another portion via the coupler 480b to the power monitor 490b and to the EDFA 470b. The EDFA 470b amplifies radiation received thereat from the coupler 480b and outputs corresponding amplified radiation to the demultiplexer 460b. The demultiplexer 460b filters radiation received thereat from the EDFA 470b and thereby separates out radiation components according to their wavelength to associated N optical outputs.

Radiation received at the node 330 via the fibre waveguide 350 is diverted through the coupler 480b to the power monitor 490b which measures power received thereat and generates corresponding power indicative data. The power indicative data is subsequently passed to the power controller 520b. The power controller 520b functions as part of a feedback loop for controlling attenuation provided by the attenuator 420a to stabilize radiation power as measured by the power monitor 490b at a predetermined level. The power controller 520b outputs error data for adjusting attenuation provided by the attenuator 420a, the error data passing to the supervisory channel data inserting unit 440b which inserts the error data into a supervisory channel associated with second output radiation emitted from the second node 330 into the fibre waveguide 360. The second radiation propagates to the first node 310 and a portion of the radiation is coupled through the coupler 500a to the supervisory channel data extracting unit 510a which isolates the error data generated in the power controller 520b and passes it to the control input of the attenuator 420a.

The detector array 450a monitors radiation power in the radiation signals input to the multiplexer 400a and passes corresponding radiation power indicative data to the data inserting unit 440a which outputs the power indicative data in appropriate digital format onto the first output radiation which propagates to the second node 330, for example via the supervisory channel. The power indicative data is used in the nodes 310, 330 to determine which of the N inputs to the multiplexer 400a are active. The power indicative data is retrieved at the second node 330 by the data extracting unit 510b; the data is conveyed to the power controller 520b for use therein for calculating appropriate error data for determining attenuation to be provided by the attenuator 420a for achieving a predetermined radiation power level as monitored by the power monitor 490b.

In a similar manner to the nodes 20, 40, in a first operating regime, the predetermined power level can be maintained by the power controllers 520a, 520b at a constant level, irrespective of the number of active inputs to the multiplexers 400a, 400b. Alternatively, in a second operating regime, the predetermined power level can be varied as a linear function of the number of active inputs as determined by the detector arrays 450a, 450b. The first regime ensures that the EDFAs 410a, 410b are operating at nominally constant power, whereas the second regime ensures that radiation power per WDM channel conveyed through the fibre waveguides 350, 360 is nominally constant. When none of the input ports to the multiplexers 400a, 400b are active, their associated power controllers 520b, 520a respectively can set their associated attenuators 420a, 420b to provide a relatively high attenuation, for example in the order of -35 dB and at least greater than -20 dB, such high attenuation preventing the attenuators 420a, 420b otherwise being set by their feedback loops to provide minimum attenuation resulting in significant optical noise being injected into the fibre waveguides 350, 360. Such optical noise can, for example, result in an increase in system communication traffic bit error rate.

It will be appreciated from the foregoing that in both the nodes 20, 40 as well as the nodes 310, 330 power control is achieved by stabilising received radiation power by way of feedback loops and omitting input attenuators to ensure that only a requisite amount of radiation power is output to the waveguides 60, 70, 350, 360, thereby keeping to a minimum optical non-linearities arising in the waveguides. There arises a threshold level of radiation power below which system performance does not improve as the radiation power output to the waveguides 60, 70, 350, 360 is reduced; other factors, for example polarisation mode dispersion or chromatic dispersion, at the threshold level begin to dominate system performance. In comparison, it is conventional practice to emit as much power as possible into waveguides and then to dissipate excess power at locations of radiation reception; such an approach results in greater fibre waveguide non-linearities arising than necessary.

It will also be appreciated by one skilled in the art that modifications can be made to the nodes 20, 40, 310, 330 without departing from the scope of the invention. For example, one or more of the attenuators 120a, 120b, 420a, 420b can be a multichannel attenuator allowing independent attenuation adjustment for each WDM channel present in radiation propagating therethrough. In this respect, one or more of the power monitors 210a, 210b, 490a, 490b can be modified to measure radiation power present in each WDM channel received thereat. Such a modification enables the feedback loops provided in the nodes 20, 40, 310, 330 not only to reduce optical non-linearities in the fibre waveguides 60, 70, 350, 360 but also to provide a power leveling function. The power leveling function can be used to substantially mutually equalize power present in the active channels; equalization is defined as corresponding to a mutual power difference of less than 6 dB between the active channels. Such power leveling circumvents power hogging to certain more prominent channels from occurring in the EDFAs 190a, 190b, 470a, 470b. Moreover, the power leveling also compensates for any wavelength dependent attenuation effects which may occur within the fibre waveguides 60, 70, 350, 360.

With regard to N, namely the number of input ports to the multiplexers 100a, 100b, 400a, 400b, and also the number of output ports of the demultiplexers 200a, 200b, 460a, 460b, N is preferably in a range of 8 to 128 to make the nodes 20, 40, 310, 330 compatible with future optical communication systems.

The nodes 20, 40, 310, 330 can form part of an optical communication system wherein the nodes 20, 40, 310, 330 function as cross-connects and add/drop multiplexers.

## Claims

1. A method of power control in a wavelength division multiplex (WDM) optical communication system, the WDM system comprising a plurality of nodes coupled together by optical waveguiding means for guiding communication traffic bearing radiation between the nodes, the radiation being wavelength division multiplexed into a plurality of channels having mutually different wavebands, the method **characterised by**: regulating the power of the communication traffic bearing radiation at the first node using power regulating means to provide optical output radiation; transmitting the optical output radiation through the waveguiding means to a second node of the system; measuring radiation power of radiation received at the second node to generate corresponding power indicative data; generating error data for regulating the optical output radiation measured at the second node to a predetermined power level; and controlling the radiation power received at the second node at the predetermined level by controlling the power of the optical output radiation at the first node in response to the error data.

2. A method according to Claim 1 and comprising communicating at least one of the power indicative data and the error data to the first node

3. A method according to Claim 2 and comprising communicating said data in a WDM supervisory channel.

4. A method according to any preceding claim and comprising determining the number of active wavelength division multiplexed channels present in the communication traffic bearing radiation

5. A method according to Claim 4 and comprising varying the predetermined level in response to the number of active channels.

6. A method according to Claim 5 and comprising varying the predetermined level substantially as a linear function of the number of active channels so that radiation power per active channel is maintained substantially constant at the second node in operation.

7. A method according to any one of Claims 4 and comprising maintaining the power level at a substantially constant value when one or more channels in the output radiation are determined as being active.

8. A method according to any one of Claims 4 to 7 and comprising setting the regulating means to an attenuation greater than -20 dB when none of the channels are determined as being active.

9. A method according to any one of Claims 4 to 8 and comprising communicating the number of active channels to the second node.

10. A method according to Claim 9 and comprising communicating the number of active channels in a supervisory channel associated with the channels bearing the communication traffic.

11. A method according to any preceding claim wherein the regulating means is capable to attenuating independently radiation of each channel; and comprising measuring radiation power for each channel received at the second node and independently controlling attenuation of each channel at the first node to substantially equalize radiation power present in the channels which are active.

12. A method according to any preceding claim wherein the regulating means is provided by an optical amplifier whose forward gain is controllable by the error data modulating optical pumping power applied to the amplifier.

13. A wavelength division mulitiplex (WDM) optical communication system (10:300) comprising: a plurality of nodes (20,40:310,330) coupled together by optical waveguiding means (60,70:350,360) for guiding communication traffic bearing radiation between the nodes, the radiation being wavelength division multiplexed into a plurality of channels having mutually different wavebands, **characterised by**: power regulating means (120:420) for regulating radiation power of the communication traffic bearing radiation at the first node (20:310) to generate corresponding output radiation; emitting means at the first node for emitting the output radiation into the waveguiding means for propagation to a second node (40:330) of the system; radiation power measuring means (210:490) for measuring radiation power of radiation received at the second node (40:330) and for generating corresponding power indicative data; and controlling means (160:520) for generating error data for regulating the optical output radiation measured at the second node to a predetermined level and controlling the radiation power received at the second node to a predetermined level by controlling the power of the optical output radiation in response to the error data.

14. A system according to Claim 13 and comprising means (440:140) for communicating at least one of the error data and the power indicative data to the first node (20,40:310,330).

15. A system according to Claim 14 wherein the controlling means (160) is located at the first node (20) and the power indicative data is communicated to the first node (310).

16. A system according to Claim 14 wherein the controlling means (520) is located at the second node (330) and the error data is communicated to the first node (310).

17. A system according to any one of Claims 14 to 16 and comprising communicating said data in a WDM supervisory channel.

18. A system according to any one of Claims 13 to 17 wherein the first node (20:310) includes monitoring means (150:450) for determining the number of active wavelength division multiplexed channels present in the communication traffic bearing radiation.

19. A system according to Claim 18 and further comprising varying the predetermined level in response to the number of active channels.

20. A system according to Claim 19 wherein the controlling means (160:520) is operable to vary the predetermined level substantially as a linear function of the number of active channels so that the radiation power per active channel remains substantially constant at the second node in operation.

21. A system according to Claim 18 wherein the controlling means (160:520) is operable to maintain the predetermined power level substantially constant when one or more channels in the output radiation are determined as being active.

22. A system according to any one of Claims 18 to 21 wherein the controlling means (160:520) is operable to set the regulating means (120:420) to an attenuation greater than -20 dB when none of the channels are active.

23. A system according to any one of Claims 18 to 22 wherein the controlling means (520) is located at the second node (330) and further comprising means (440) for communicating the number of active channels to the second node (330).

24. A system according to Claim 23 wherein the number of active channels is communicated to the second node in a WDM supervisory channel associated with the channels bearing the communication traffic.

25. A system according to any one of Claims 13 to 24 wherein the regulating means (120:420) is operable to independently regulate radiation power of radiation associated with each channel, and the monitoring means (210:490) is operable to monitor radiation power of each channel received at the second node and wherein the controlling means is operable to individually adjust radiation power of each channel at the first node to substantially mutually equalize radiation power of the channels which are active.

26. A system according to Claim 25 wherein the active channels are mutually equalized in radiation power to within 6 dB.

## Patentansprüche

1. Verfahren zur Leistungssteuerung in einem optischen Wellenlängenmultiplex-(wavelength division multiplex - WDM)-Kommunikationssystem, wobei das WDM-System eine Vielzahl von Knoten umfasst, die durch eine optische Wellenleitungseinrichtung zum Führen von Kommunikationsverkehr, der zwischen den Knoten eine Strahlung trägt, zusammengekoppelt sind, wobei die Strahlung in eine Vielzahl von Kanälen mit jeweils unterschiedlichen Wellenbändern wellenlängenmultiplexiert ist, wobei das Verfahren **gekennzeichnet ist durch**:
Regeln der Leistung des die Strahlung tragenden Kommunikationsverkehrs am ersten Knoten **durch** Verwendung einer Leistungsregelungseinrichtung zur Bereitstellung einer optischen Ausgangsstrahlung; Übertragen der optischen Ausgangsstrahlung **durch** die Wellenleitungseinrichtung an einen zweiten Knoten des Systems, Messen der Strahlungsleistung von an dem zweiten Knoten empfangener Strahlung zur Erzeugung entsprechender leistungsangebender Daten; Erzeugen von Fehlerdaten zum Regeln der an dem zweiten Knoten gemessenen optischen Ausgangsstrahlung auf einen vorbestimmten Leistungspegel; und Steuern der an dem zweiten Knoten auf dem vorbestimmten Pegel empfangenen Leistung **durch** Steuern der Leistung der optischen Ausgangsstrahlung an dem ersten Knoten als Antwort auf die Fehlerdaten.

2. Verfahren nach Anspruch 1, umfassend das Übermitteln mindestens einer der leistungsangebenden Daten und der Fehlerdaten an den ersten Knoten.

3. Verfahren nach Anspruch 2, umfassend das Übermitteln dieser Daten in einem WDM-Überwachungskanal.

4. Verfahren nach einem der vorstehenden Ansprüche, umfassend das Bestimmen der Anzahl von aktiven wellenlängenmultiplexierten Kanälen, die in dem Kommunikationsverkehr vorliegen, der die Strahlung trägt.

5. Verfahren nach Anspruch 4, umfassend das Ändern des vorbestimmten Pegels als Antwort auf die Anzahl aktiver Kanäle.

6. Verfahren nach Anspruch 5, umfassend das Ändern des vorbestimmten Pegels im Wesentlichen als eine lineare Funktion der Anzahl von aktiven Kanälen, so dass im Betrieb die Strahlungsleistung pro aktivem Kanal am zweiten Knoten im Wesentlichen konstant aufrechterhalten wird.

7. Verfahren nach Anspruch 4, umfassend das Aufrechterhalten des Leistungspegels auf einem im Wesentlichen konstanten Wert, wenn einer oder mehr Kanäle in der Ausgangsstrahlung als aktiv bestimmt werden.

8. Verfahren nach einem der Ansprüche 4 bis 7, umfassend das Setzen der Regeleinrichtung auf eine Dämpfung größer als -20 dB, wenn keiner der Kanäle als aktiv bestimmt wird.

9. Verfahren nach einem der Ansprüche 4 bis 8, umfassend das Übermitteln der Anzahl aktiver Kanäle an den zweiten Knoten.

10. Verfahren nach Anspruch 9, umfassend das Übermitteln der Anzahl aktiver Kanäle in einem Überwachungskanal, der den Kanälen zugeordnet ist, die den Kommunikationsverkehr tragen.

11. Verfahren nach einem der vorstehenden Ansprüche, wobei die Regeleinrichtung für die unabhängige Dämpfung von Strahlung jedes Kanals ausgestaltet ist, und umfassend das Messen von Strahlungsleistung für jeden an dem zweiten Knoten empfangenen Kanal sowie das unabhängige Steuern der Dämpfung jedes Kanals an dem ersten Knoten, um die in den aktiven Kanälen vorliegende Strahlungsleistung im Wesentlichen zu entzerren.

12. Verfahren nach einem der vorstehenden Ansprüche, wobei die Regeleinrichtung durch einen optischen Verstärker bereitgestellt wird, dessen Vorwärtsverstärkung durch die Fehlerdaten steuerbar ist, die dem Verstärker zugeführte optische Pumpleistung modulieren.

13. Optisches Wellenlängenmultiplex-(wavelength division multiplex - WDM)-Kommunikationssystem (10:300), umfassend eine Vielzahl von Knoten (20,40:310,330), die durch eine optische Wellenleitungseinrichtung (60,70:350,360) zum Führen von Kommunikationsverkehr, der zwischen den Knoten eine Strahlung trägt, zusammengekoppelt sind, wobei die Strahlung in eine Vielzahl von Kanälen mit jeweils unterschiedlichen Wellenbändern wellenlängenmultiplexiert ist, **gekennzeichnet ist durch**:
eine Leistungsregelungseinrichtung (120:420) zum Regeln von Strahlungsleistung des die Strahlung tragenden Kommunikationsverkehrs am ersten Knoten (20:310) zur Erzeugung entsprechender Ausgangsstrahlung; eine Emissionseinrichtung an dem ersten Knoten zum Emittieren der Ausgangsstrahlung in die Wellenleitungseinrichtung zur Weiterleitung an einen zweiten Knoten (40:330) des Systems; eine Strahlungsleistungsmesseinrichtung (210:490) zum Messen von Strahlungsleistung von an dem zweiten Knoten (40:330) empfangener Strahlung und zur Erzeugung entsprechender leistungsangebender Daten; sowie eine Steuereinrichtung (160:520) zum Erzeugen von Fehlerdaten zum Regeln der an dem zweiten Knoten gemessenen optischen Ausgangsstrahlung auf einen vorbestimmten Pegel und Steuern der an dem zweiten Knoten empfangenen Strahlungsleistung auf einen vorbestimmten Pegel **durch** Steuern der Leistung der optischen Ausgangsstrahlung als Antwort auf die Fehlerdaten.

14. System nach Anspruch 13, umfassend eine Einrichtung (440:140) zum Übermitteln mindestens einer der Fehlerdaten und der leistungsangebenden Daten an den ersten Knoten (20,40:310,330).

15. System nach Anspruch 14, wobei die Steuereinrichtung (160) am ersten Knoten (20) angeordnet ist und die leistungsangebenden Daten an den ersten Knoten (310) übermittelt werden.

16. System nach Anspruch 14, wobei die Steuereinrichtung (520) am zweiten Knoten (330) angeordnet ist und die Fehlerdaten an den ersten Knoten (310) übermittelt werden.

17. System nach einem der Ansprüche 14 bis 16, umfassend das Übermitteln dieser Daten in einem WDM-Überwachungskanal.

18. System nach einem der Ansprüche 13 bis 17, wobei der erste Knoten (20:310) eine Überwachungseinrichtung (150:450) zum Bestimmen der Anzahl von aktiven wellenlängenmultiplexierten Kanälen umfasst, die in dem Kommunikationsverkehr vorliegen, der die Strahlung trägt.

19. System nach Anspruch 18, weiterhin umfassend das Ändern des vorbestimmten Pegels als Antwort auf die Anzahl aktiver Kanäle.

20. System nach Anspruch 19, wobei die Steuereinrichtung (160:520) ausgestaltet ist zum Ändern des vorbestimmten Pegels im Wesentlichen als eine lineare Funktion der Anzahl von aktiven Kanälen, so dass im Betrieb die Strahlungsleistung pro aktivem Kanal am zweiten Knoten im Wesentlichen konstant bleibt.

21. System nach Anspruch 18, wobei die Steuereinrichtung (160:520) ausgestaltet ist, den vorbestimmten Leistungspegels im Wesentlichen konstanten zu halten, wenn einer oder mehr Kanäle in der Ausgangsstrahlung als aktiv bestimmt werden.

22. System nach einem der Ansprüche 18 bis 21, wobei die Steuereinrichtung (160:520) ausgestaltet ist zum Setzen der Regeleinrichtung (120:420) auf eine Dämpfung größer als -20 dB, wenn keiner der Kanäle aktiv ist.

23. System nach einem der Ansprüche 18 bis 22, wobei die Steuereinrichtung (520) am zweiten Knoten (330) angeordnet ist, und weiterhin umfassend eine Einrichtung (440) zum Übermitteln der Anzahl aktiver Kanäle an den zweiten Knoten (330).

24. System nach Anspruch 23, wobei die Anzahl aktiver Kanäle an den zweiten Knoten in einem WDM-Überwachungskanal übermittelt wird, der den Kanälen zugeordnet ist, die den Kommunikationsverkehr tragen.

25. System nach einem der Ansprüche 13 bis 24, wobei die Regeleinrichtung (120:420) für die unabhängige Regelung von Strahlungsleistung der jedem Kanal zugeordneten Strahlung ausgestaltet ist, und die Überwachungseinrichtung (210:490) zur Überwachung von Strahlungsleistung jedes Kanals, die an dem zweiten Knoten empfangen wird, ausgestaltet ist, und wobei die Steuereinrichtung zur individuellen Einstellung der Strahlungsleistung jedes Kanals an dem ersten Knoten ausgestaltet ist, um die Strahlungsleistung der aktiven Kanäle im Wesentlichen jeweils zu entzerren.

26. System nach Anspruch 25, wobei die aktiven Kanäle in der Strahlungsleistung auf innerhalb 6 dB jeweils entzerrt werden.

## Revendications

1. Procédé de commande de puissance dans un système de communication optique à multiplexage par répartition en longueur d'onde (WDM), le système WDM comprenant une pluralité de noeuds couplés les uns aux autres par des moyens de guidage d'ondes optiques pour guider une radiation portant le trafic de communication entre les noeuds, la radiation étant multiplexées par répartition en longueur d'onde en une pluralité de canaux ayant des bandes d'ondes mutuellement différentes, le procédé étant **caractérisé par** : la régulation de la puissance de la radiation portant le trafic de communication au niveau du premier noeud en utilisant un moyen de régulation de puissance pour fournir une radiation de sortie optique ; la transmission de la radiation optique de sortie via les moyens de guidage d'ondes vers un second noeud du système ; la mesure de la puissance de radiation de la radiation reçue au niveau du second noeud afin de générer des données indicatrices de puissance correspondantes ; la génération de données d'erreur pour réguler la radiation optique de sortie mesurée au niveau du second noeud à un niveau de puissance prédéterminé ; et commander la puissance de radiation reçue au niveau du second noeud au niveau prédéterminé en commandant la puissance de la radiation optique de sortie au niveau du premier noeud en réponse aux données d'erreur.

2. Procédé selon la revendication 1 et comprenant la communication d'au moins une des données indicatrices de puissance et des données d'erreur au premier noeud.

3. Procédé selon la revendication 2 et comprenant la communication desdites données dans un canal de supervision WDM.

4. Procédé selon l'une quelconque des revendications précédentes et comprenant la détermination du nombre de canaux multiplexés par répartition en longueur d'onde actifs, présents dans la radiation portant le trafic de communication.

5. Procédé selon la revendication 4 et comprenant la variation du niveau prédéterminé en réponse au nombre de canaux actifs.

6. Procédé selon la revendication 5 et comprenant la variation du niveau prédéterminé essentiellement comme une fonction linéaire du nombre de canaux actifs de telle sorte que la puissance de radiation par canal actif soit maintenue essentiellement constante au niveau du second noeud en fonctionnement.

7. Procédé selon l'une quelconque des revendications 4 et comprenant le maintien du niveau de puissance à une valeur essentiellement constante lorsque un ou plusieurs canaux dans la radiation de sortie sont déterminés comme étant actifs.

8. Procédé selon l'une quelconque des revendications 4 à 7 et comprenant le réglage du moyen de régulation à une atténuation supérieure à -20 dB lorsque aucun des canaux n'est déterminé comme étant actif.

9. Procédé selon l'une quelconque des revendications 4 à 8 et comprenant la communication du nombre de canaux actifs au second noeud.

10. Procédé selon la revendication 9 et comprenant la communication du nombre de canaux actifs dans un canal de supervision associé aux canaux portant le trafic de communication.

11. Procédé selon l'une quelconque des revendications précédentes, dans lequel le moyen de régulation est capable d'atténuer indépendamment de la radiation de chaque canal ; et comprenant la mesure de la puissance de radiation pour chaque canal reçu au niveau du second noeud et la commande, indépendamment, de l'atténuation de chaque canal au niveau du premier noeud afin d'égaliser essentiellement la puissance de radiation présente dans les canaux qui sont actifs.

12. Procédé selon l'une quelconque des revendications précédentes, dans lequel le moyen de régulation est fourni par un amplificateur optique dont le gain vers l'avant peut être commandé par les données d'erreur modulant la puissance de pompage optique appliquée à l'amplificateur.

13. Système de communication optique (10 :300) à multiplexage par répartition en longueur d'onde (WDM) comprenant : une pluralité de noeuds (20,40 :310,330) couplés les uns aux autres par des moyens de guidage d'onde optique (60,70 :350,360) pour guider la radiation portant le trafic de communication entre les noeuds, la radiation étant multiplexée par répartition en longueur d'onde en une pluralité de canaux ayant des bandes d'ondes mutuellement différentes, **caractérisé par** : un moyen de régulation de puissance (120 :420) pour réguler la puissance de radiation de la radiation portant le trafic de communication au niveau du premier noeud (20 :310) afin de générer une radiation de sortie correspondante ; un moyen d'émission au niveau du premier noeud pour émettre la radiation de sortie dans le moyen de guidage d'onde en vue d'une propagation vers un second noeud (40 :330) du système ; un moyen de mesure de la puissance de radiation (210 :490) pour mesurer la puissance de radiation de la radiation reçue au niveau du second noeud (40 :330) et pour générer des données indicatrices de puissance correspondantes ; et un moyen de commande (160 :520) pour générer des données d'erreur en vue de la régulation de la radiation optique de sortie mesurée au niveau du second noeud à un niveau prédéterminé et commander la puissance de radiation reçue au niveau du second noeud à un niveau prédéterminé en commandant la puissance de la radiation optique de sortie en réponse aux données d'erreur.

14. Système selon la revendication 13 et comprenant des moyens (440 :140) pour communiquer au moins une des données d'erreur et des données indicatrices de puissance au premier noeud (20,40 :310,330).

15. Système selon la revendication 14, dans lequel le moyen de commande (160) est situé au niveau du premier noeud (20) et les données indicatrices de puissance sont communiquées au premier noeud (310).

16. Système selon la revendication 14, dans lequel le moyen de commande (520) est situé au niveau du second noeud (330) et les données d'erreur sont communiquées au premier noeud (310).

17. Système selon l'une quelconque des revendications 14 à 16 et comprenant la communication desdites données dans un canal de supervision WDM.

18. Système selon l'une quelconque des revendications 13 à 17, dans lequel le premier noeud (20 :310) inclut un moyen de surveillance (150 :450) pour déterminer le nombre de canaux multiplexés par répartition en longueur d'onde actifs, présents dans la radiation portant le trafic de communication.

19. Système selon la revendication 18 et comprenant en outre la variation du niveau prédéterminé en réponse au nombre de canaux actifs.

20. Système selon la revendication 19, dans lequel le moyen de commande (160 :520) est mis en fonctionnement afin de varier le niveau prédéterminé essentiellement comme une fonction linéaire du nombre de canaux actifs de telle sorte que la puissance de radiation par canal actif reste essentiellement constante au niveau du second noeud en fonctionnement.

21. Système selon la revendication 18, dans lequel le moyen de commande (160 :520) est mis en fonctionnement afin de maintenir le niveau de puissance prédéterminé essentiellement constant lorsque un ou plusieurs canaux dans la radiation de sortie sont déterminés comme étant actifs.

22. Système selon l'une quelconque des revendications 18 à 21, dans lequel le moyen de commande (160 :520) est mis en fonctionnement afin de régler le moyen de régulation (120 :420) à une atténuation supérieure à - 20 dB lorsque aucun des canaux n'est actif.

23. Système selon l'une quelconque des revendications 18 à 22, dans lequel le moyen de commande (520) est situé au niveau du second noeud (330) et comprenant en outre un moyen (440) pour communiquer le nombre de canaux actifs au second noeud (330).

24. Système selon la revendication 23, dans lequel le nombre de canaux actifs est communiqué au second noeud dans un canal de supervision WDM associé aux canaux portant le trafic de communication.

25. Système selon l'une quelconque des revendications 13 à 24, dans lequel le moyen de régulation (120 :420) est mis en fonctionnement afin de réguler indépendamment la puissance de radiation de la radiation associée à chaque canal, et le moyen de surveillance (210 :490) est mis en fonctionnement afin de surveiller la puissance de radiation de chaque canal reçu au niveau du second noeud et dans lequel le moyen de commande est mis en fonctionnement afin d'ajuster individuellement la puissance de radiation de chaque canal au niveau du premier noeud de manière à essentiellement égaliser mutuellement la puissance de radiation des canaux qui sont actifs.

26. Système selon la revendication 25, dans lequel les canaux actifs sont mutuellement égalisés en puissance de radiation à 6 dB.
